# EUROPÄISCHE PATENTANMELDUNG

(11) **EP 1 172 758 A2**
(43) Veröffentlichungstag der Anmeldung: **16.01.2002**
(21) Anmeldenummer: 01116513.1
(22) Anmeldetag: 07.07.2001
(51) Int. Cl.: G06K 7/12

(54) **Informationssystem zur Kennzeichnung von Gegenständen**

(30) Priorität: 11.07.2000 DE 10033651
(71) Anmelder: MESSER GRIESHEIM GMBH, 60547 Frankfurt (DE)
(72) Erfinder: Dierchx, Marc, 4300 Kajang (MY); Herzog, Friedhelm, 47799 Krefeld (DE)

(57) **Zusammenfassung**

Bekannt sind Barcodes oder Mikrochips, die auf der Oberfläche eines Gegenstandes angeordnet werden und in denen Informationen über den Gegenstand, den Hersteller, Eigentümer oder Kunden abgespeichert werden können. Damit derartige Markierungen nicht zu einer Beeinträchtigung von auf der Oberfläche angebrachten Standard-Kennzeichnungen, wie etwa Warnhinweise oder Werbeaufdrucke führen, sind sie sehr klein und müssen mit aufwendigen Detektoren abgelesen werden.

Erfindungsgemäß umfasst ein Informationssystem eine Markierung, die auf der Oberfläche eines Gegenstandes mittels Markierungsmitteln anbringbar ist, die im sichtbaren Spektralbereich unsichtbar, in einem nicht-sichtbaren Spektralbereich jedoch durch einen geeigneten Detektor visualisiert werden können.

Die Markierung kann einen fast beliebig großen Anteil der Oberfläche des Gegenstandes einnehmen und kann daher auch von entfernteren Aufnahmeeinrichtungen, etwa einer elektronischen Kamera, gelesen werden.

## Beschreibung

Die Erfindung betrifft ein Informationssystem zur Kennzeichnung von Gegenständen, mit einer auf der Oberfläche eines Gegenstandes anbringbaren, Informationen über den Gegenstand enthaltenden Markierung sowie mit einer Erfassungseinrichtung zum Lesen der in der Markierung enthaltenen Information.

Derartige Informationssysteme sind bekannt. So werden beispielsweise bei Gütern, die in Leihbehältern geliefert werden, Barcode-Aufkleber eingesetzt, die Informationen über den Inhalt des Behälters, den Vertreiber oder den Kunden enthalten, und die vor der Auslieferung auf der Behälteroberfläche befestigt werden. Mithilfe eines Barcode-Scanners kann die Information leicht abgerufen und einer Weiterverarbeitung zugeführt werden.

Ein anderes vorbekanntes Informationssystem besteht darin, die entsprechenden Informationen in einem Mikrochip zu speichern, der an dem Gegenstand befestigt wird. Die gespeicherte Information kann mittels geeigneter Lesegeräte erfasst werden.

Zum Verkauf bestimmte Gegenstände werden häufig mit Standard-Kennzeichnungen, wie beispielsweise Typenbezeichnungen, Marken, Werbeaufdrucke, Adressaufkleber, Warnhinweise oder gesetzliche vorgeschriebene Markierungen versehen. All diese Standard-Kennzeichnungen erfordern einen mehr oder weniger großen Teil der Oberfläche des Gegenstandes und begrenzen so die Fläche, die der zu einem Informationssystem der oben genannten Art gehörenden Markierung maximal zur Verfügung steht. Dementsprechend sind diese Markierungen üblicherweise im Vergleich zur Gesamtoberfläche des Gegenstandes sehr klein gehalten. Als Folge muss die Erfassungseinrichtung zum Ablesen der in der Markierung abgespeicherten Informationen sehr nahe an die Markierung herangeführt werden. Dies erfordert jedoch einen beträchtlichen apparativen und/oder personellen Aufwand.

Aufgabe der vorliegenden Erfindung ist daher, ein Informationssystem der eingangs genannten Art und Zweckbestimmung zu schaffen, das eine einfache und kostengünstige Ablesung der in der Markierung gespeicherten Information erlaubt.

Gelöst ist diese Aufgabe bei einem Informationssystem mit den Merkmalen des Oberbegriffs des Anspruchs 1 dadurch, dass für die Markierung Markierungsmittel eingesetzt werden, die unter Normalbedingungen unsichtbar, jedoch mit einem für die Markierungsmittel spezifizierten Detektor der Erfassungseinrichtung visualisierbar sind.

Erfindungsgemäß werden für die Markierung also Markierungsmittel eingesetzt, die unter Normalbedingungen unsichtbar sind, und die somit Standard-Kennzeichnungen, mit denen der Gegenstand versehen ist, nicht beeinträchtigen. Erst mit Hilfe eines für die Markierungsmittel spezifizierten Detektors sind die in der Markierung enthaltenen Informationen ablesbar.

Als Detektor wird hier jedes Hilfsmittel verstanden, mittels dessen die Markierung auf optischem, elektronischem oder sonstigem Wege visualisierbar ist. Dazu zählen beispielsweise elektronische oder optische Aufnahmeeinrichtungen sowie Beleuchtungssysteme oder sonstige Einrichtungen, mit denen die zur unmittelbaren sinnlichen Wahrnehmung der Markierung notwendigenBedingungen herstellbar sind.

Die Markierung kann alle Informationen enthalten, die für den Gegenstand von Belang sind und die auch in herkömmlichen Markierungen wie Strichcodeaufkleber oder Mikrochips abgespeichert werden können, so etwa Angaben zu Art des Gegenstandes, Hersteller, Inhaber, Preis, Kunde, etc.. Die Information kann dabei in Klarschrift oder codiert, etwa in einer Zahlen- oder Strichcodierung in der Markierung abgelegt sein. Zwar sind Systeme, bei denen Markierungen erst mittels spezieller Detektorsysteme visualisierbar sind, von Sicherungssystemen für Banknoten u. dergl. bekannt, bei denen beispielsweise eine fluoreszierende Einfärbung mit Hilfe einer geeigneten Lichteinstrahlung zum Leuchten gebracht wird. Diese vorbekannte Art von Markierungen sind jedoch notwendigerweise fester und unveränderbarer Bestandteil der Banknote selbst und können nicht wie bei der Erfindung dazu genutzt werden, um Informationen über den Gegenstand abzuspeichern, die diesen Gegenstand gegenüber anderen Gegenständen der gleichen Art individualisieren.

In einer speziellen Ausgestaltung der Erfindung ist die Markierung ablösbar mit der Oberfläche des Gegenstandes verbunden. In diesem Falle kann die Markierung bzw. die in ihr enthaltene Information bei Bedarf leicht ausgetauscht werden. Die für die Markierung eingesetzten Markierungsmittel können dabei entweder selbst ablösbar mit der Oberfläche verbunden sein, oder aber die Markierungsmittel sind auf ein ablösbares, im übrigen transparentes Medium, etwa eine Folie aufgetragen, das seinerseits lösbar mit der Oberfläche verbunden ist.

Zweckmäßigerweise handelt es sich bei den für die Markierung eingesetzten Markierungsmittel um eine Beschichtung, etwa einen Farbanstrich, die aus einem Material besteht, das im sichtbaren Spektralbereich im wesentlichen transmittiert, in einem nicht-sichtbaren Spektralbereich; etwa Ultraviolett oder Infrarot, jedoch reflektiert oder absorbiert. Die Ablesung der Information erfolgt in dieser Ausgestaltung durch einen geeigneten, in dem entsprechenden Spektralbereich empfindlichen Detektor. Im Falle eines reflektierenden Markierungsmittels sollte sich dessen Reflexionsvermögen deutlich von dem der Oberfläche, bzw. des Mediums, auf welches das Markierungsmittel aufgetragen wurde, unterscheiden, um eine zuverlässige Ablesung der gespeicherten Information zu erlauben. Im Falle eines absorbierenden Markierungsmittel besteht die Information aus der Differenz zur ursprünglich vorhandenen Bildinformation in diesem Spektralbereich.

Alternativ oder ergänzend zur vorgenannten Ausführungsform kommt ein luminiszierendes, also fluoreszierendes oder phosphoreszierendes Markierungsmittel in Betracht, das bei Bestrahlung mit elektromagnetischer Strahlung in einem bestimmten Spektralbereich zum Leuchten in einem gleichen oder einem längerwelligen Spektralbereich angeregt wird.

Vorteilhafterweise umfasst der Detektor eine elektronische Aufnahmevorrichtung, beispielsweise eine elektronische Kamera, mittels der ein frei wählbarer Bereich der Oberfläche des Gegenstandes erfassbar ist. Derartige Aufnahmevorrichtungen sind preisgünstig in der Anschaffung und universell einsetzbar und ermöglichen die zusätzliche Erfassung von Informationen, die nicht in der Markierung, sondern beispielsweise in Standard-Kennzeichnungen abgelegt sind.

Um die Auswertung der in der Markierung abgespeicherten Informationen zu vereinfachen und zu automatisieren, steht die Aufnahmevorrichtung bevorzugt mit einer Auswerteeinheit in Datenaustausch, mittels der die von der Aufnahmevorrichtung übertragenen Bildinformationen in Daten über den Gegenstand umwandelbar ist. Die von der Auswerteeinheit zu verarbeitenden Informationen müssen sich dabei keineswegs auf die Informationen beschränken, die in der Markierung unmittelbar abgespeichert ist, es können auch zusätzliche Informationen ausgewertet werden, beispielsweise Informationen über das Umfeld des Gegenstandes, über Fehler im Betriebsablauf oder Informationen, die in einer Standard-Kennzeichnung des Gegenstandes abgelegt ist.

Vorteilhafterweise ist der Aufnahmevorrichtung und/oder der Auswerteeinheit eine optische oder elektronische Filterung zuschaltbar, die den Spektralbereich herausfiltert, in dem das Markierungsmittel optisch erfassbar ist. Die Filterung der aufgenommenen Bildinformationen erhöht die Zuverlässigkeit der Auswertung.

Eine bevorzugte Weiterbildung der Erfindung sieht vor, dass die Aufnahmevorrichtung über ein Datenfernübertragungsmedium mit der Auswerteeinheit in Datenaustausch steht. Dadurch ist es möglich, die Auswertung der Bildinformation räumlich weit entfernt von der Aufnahmeeinrichtung vorzunehmen. Auch können mehrere Aufnahmeeinrichtungen mit einer Auswerteeinheit in Datenverbindung stehen. Das Datenfernübertragungsmedium kann dabei beispielsweise eine Leitung oder eine Funkverbindung sein.

Um die Auswertung besonders flexibel und preisgünstig zu handhaben, ist es vorteilhaft, wenn das Datenfernübertragungsmedium ein nichtlokales Datennetz umfasst. Als nichtlokales Datennetz kommt beispielsweise ein Telefonnetz, ein Funknetz, ein Verteilungsnetz, beispielsweise ein Stromverteilungsnetz, oder das Internet in Betracht.

Zweckmäßigerweise ist die Auswerteeinheit zwecks Digitalisierung der von der Aufnahmeeinrichtung übertragenen Bildinformation mit einer Software zur Mustererkennung versehen. Eine solche "pattern recognition software" ermöglicht die automatische Erkennung und Weiterverarbeitung eines Bildausschnitts, der eine digitalisierbare Information enthält. So kann auch in dem Fall, dass von der Aufnahmevorrichtung eine über das Abbild der Markierung hinausreichende Bildinformation an die Auswerteeinheit übertragen wird, die Markierung erkannt und die darin enthaltene Information einer Auswertung zugeführt werden.

Besonders vorteilhaft ist der Einsatz des erfindungsgemäßen Informationssystems zur Kennzeichnung von Wechsel- und/oder Pfandbehältern. So können beispielsweise Gasbehälter, wie Druckgasflaschen, mit einer Markierung versehen werden, ohne dass hierdurch die gesetzlich vorgeschriebene Einfärbung der Gasbehälter beeinträchtigt wird. Auch können derartige Behälter mit Informationen über einen Kunden oder einem Inhaber versehen sein, ohne dass Dritte unmittelbar auf diese Informationen zugreifen können. Insofern eignet sich das erfindungsgemäße Informationssystem auch als Diebstahlsicherung.

Anhand der Zeichnung soll nachfolgend ein Ausführungsbeispiel der Erfindung näher erläutert werden.

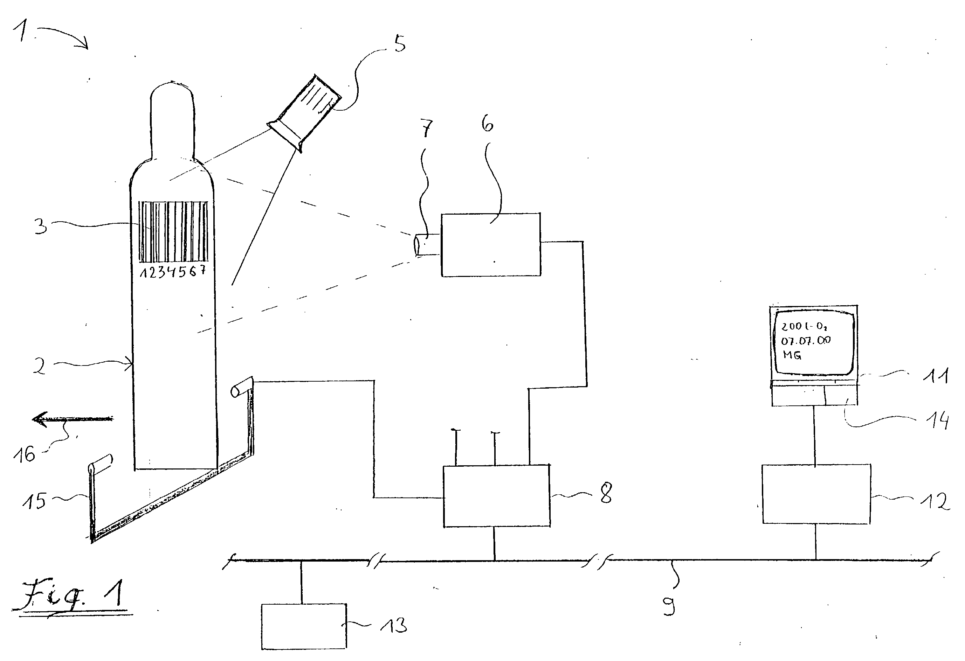

Die einzige Figur (Fig. 1) zeigt in schematischer Ansicht ein erfindungsgemäßes Informationssystem.

Das Informationssystem 1 dient zur Erfassung von Informationen, die zur Kennzeichnung und/oder zur Zuordnung von Behältern, im Ausführungsbeispiel einer Druckgasflasche 2 bestimmt sind. Druckgasflaschen weisen in Abhängigkeit von ihrem Inhalt eine gesetzlich vorgeschriebene Farbcodierung auf, die insbesondere die Möglichkeiten, auf der Oberfläche der Druckgasflasche 2 Informationen anzubringen, einschränkt.

Erfindungsgemäß ist die Druckgasflasche 2 mit einer Markierung 3 versehen, die sich über einen nicht unbeträchtlichen Teil der Oberfläche der Druckgasflasche, beispielsweise 20 x 20 cm, erstreckt. Die Markierung 3 ist mit einer fluoreszierenden Farbe aufgetragen, die erst bei Bestrahlung mit UV-Licht aus einem UV-Strahler 5 beispielsweise im violetten Spektralbereich leuchtet, unter Tageslichtbedingungen jedoch nicht oder kaum sichtbar ist. Dadurch kann sich die Markierung 3 im Prinzip auch über die gesamte Oberfläche der Druckgasflasche 2 erstrecken, ohne die gesetzlich vorgeschriebene Farbcodierung der Druckgasflasche 3 zu beeinträchtigen. Alternativ zur fluoreszierenden Farbe kann auch eine Farbe zum Einsatz kommen, die im sichtbaren Spektralbereich transmittiert, und in einem nicht-sichtbaren Spektralbereich, beispielsweise im infraroten oder ultravioletten Spektralbereich, reflektiert oder absorbiert. Auch in diesem Falle wird die gesetzlich vorgeschriebene Einfärbung der Druckgasflasche 2 nicht beeinträchtigt. Anstelle einer Einfärbung kann die Markierung auch in anderer Weise aufgetragen werden. So ist etwa vorstellbar, die Markierung mit fluoreszierender Farbe auf eine transparente Folie aufzutragen, die dann auf die Oberfläche der Druckgasflasche 2 aufgeklebt wird. Eine solche Folie ist bei Bedarf leicht abzulösen. Soll die Druckgasflasche jedoch dauerhaft markiert werden, etwa aus Gründen der Diebstahlsicherung, empfiehlt sich das unmittelbare Auftragen der Farbe.

Die Markierung 3 enthält verschiedene Informationen, die die Druckgasflasche 3 betreffen. Dazu zählen beispielsweise Informationen über den Inhalt, den Eigentümer, den Verleiher der Flasche, den Kunden, sowie Abfülldaten oder Prüfdaten. Die Markierung 3 kann auch Informationen über die Herkunft und über den Zielort der Druckgasflasche 2 enthalten.

Um eine möglichst große Informationsmenge abzuspeichern ist die Information in der Markierung 3 in codierter Form, im Beispiel mittels Strich- und Zahlencodierung, abgelegt.

Eine elektronische Kamera 6 erfasst ein Bild von der Oberfläche der Druckgasflasche 2. Die elektronische Kamera 6 ist mit einem elektronisch ansteuerbaren Zoomobjektiv 7 ausgerüstet und kann, in hier nicht gezeigter Weise, auf einem Stativ um wenigstens eine Achse verschwenkt werden. Dadurch gelingt die Aufnahme eines frei wählbaren Bildausschnitts um die Markierung 3 herum.

Die elektronische Kamera 6 ist mit einem Knotenpunkt 8 datenverbunden, der mehrere Anschlüsse für weitere elektronische Kameras aufweist und der an ein Datenfernübertragungsmedium, im Beispiel an das Internet 9 angeschlossen ist. Mittels des Knotenpunktes 8 lässt sich die von der Kamera 6 aufgenommene Bildinformation in das Internet 9 einspeisen und von einer Auswerteeinheit 11, die über einen Internetanschluss 12, etwa ein Modem, verfügt, abrufen. Bei der Auswerteeinheit 11 handelt es sich im Ausführungsbeispiel um einen Personalcomputer, der mit einer digitalen Filterung und einer Software zur Mustererkennung ausgerüstet ist. Als Datenfernübertragungsmedium kann im übrigen jedes Netz zum Einsatz kommen, das zur Übertragung von Informationen geeignet ist, wie ein Funknetz, ein Telefonnetz oder ein sonstiges Versorgungsnetz, etwa das Stromversorgungsnetz.

Die Auswerteeinheit kann zwischen einem Auswertemodus sowie einem Kontrollmodus geschaltet werden. Im Kontrollmodus ist die digitale Filterung inaktiv und auf dem Bildschirm 12 der Auswerteeinheit kann der von der elektronischen Kamera 6 aufgenommene Bildausschnitt in Bildform betrachtet werden. In diesem Modus können beispielsweise Störungen im Betriebsablauf erkannt oder auf der Druckgasflasche 2 angebrachte Standard-Kennzeichnungen, wie Farbe, Produktaufkleber, Marken, etc., gegebenenfalls mit Hilfe der Software zur Mustererkennung, gelesen werden.

Im Auswertemodus ist die digitale Filterung zugeschaltet. Die digitale Filterung filtert diejenige von der Aufnahmeeinrichtung 6 übermittelte Bildinformation aus, die dem spektralen Bereich der Fluoreszenzstrahlung der Markierung 3 entspricht, und führt sie der Software zur Mustererkennung zu. Sofern die Farbe der Markierung 3 aufgrund der Bestrahlung mit dem UV-Strahler 5 zum Leuchten angeregt wurde, gelangt so ganz überwiegend nur die Bildinformation der Markierung 3 zur Auswertung. Durch die Software zur Mustererkennung werden der Barcode und der Zahlencode der Markierung 3 als solche erkannt, normiert und in digitale Informationen umgewandelt, die zur Weiterverarbeitung in einem elektronischen Speicher 14 abrufbar abgelegt werden. Die Weiterverarbeitung der digitalisierten Informationen kann an Ort und Stelle an der Auswerteeinheit erfolgen oder sie kann über das Internet 9 vom einem frei wählbaren weiteren Internetanschluss 13 aus abgerufen werden. Beispielsweise ist vorstellbar, dass ein Kunde sich am Internetanschluss 13 über das Internet 9 mit Informationen versorgt, die in der Auswerteeinheit 11 bereitgestellt werden, beispielsweise mit Informationen über die Zahl bestellter und/oder bereits ausgelieferter Druckgasflaschen 2.

Die Kamera 6 und der UV-Strahler 5 werden mittels entsprechender Steuersignale ein- und wieder ausgeschaltet. Die Steuersignale können dabei von der Auswerteeinheit 11 gesendet oder automatisch abgegeben werden, beispielsweise - wie durch den Pfeil 16 angedeutet - beim Trahsport der Druckgasflasche 2 durch eine Lichtschranke 15, die etwa im Eingangsbereich eines Flaschenlagers angeordnet ist und die mit dem Knotenpunkt 8 in Datenverbindung steht.

Das Informationssystem 1 ist keineswegs auf Druckgasflaschen 2 beschränkt, sondern bei allen Arten von zwei- oder dreidimensionalen Gegenständen oder Verpackungen einsetzbar. Es ermöglicht die Speicherung von Informationen auf der Oberfläche des Gegenstandes oder der Verpackung, ohne Standard-Kennzeichnungen, wie Aufdrucke oder Aufschriften, zu beeinträchtigen, die sich auf dieser Oberfläche befinden und die unter Normalbedingungen, also insbesondere bei Tages- oder üblichem Kunstlicht lesbar sein sollen.

### Bezugszeichenliste

- 1.: Informationssystem
- 2.: Druckgasflasche
- 3.: Markierung
- 4.: -
- 5.: UV-Strahler
- 6.: elektronische Kamera
- 7.: Zoom-Objektiv
- 8.: Knotenpunkt
- 9.: Internet
- 10.: -
- 11.: Auswerteeinheit
- 12.: Internetanschluss
- 13.: Internetanschluss
- 14.: Speicher
- 15.: Lichtschranke
- 16.: Pfeil

## Patentansprüche

1. Informationssystem zur Kennzeichnung von Gegenständen (2), mit einer auf der Oberfläche eines Gegenstandes (2) anbringbaren, Informationen über den Gegenstand (2) enthaltenden Markierung (3), sowie mit einer Erfassungseinrichtung zum Lesen der in der Markierung (3) enthaltenen Information,
**dadurch gekennzeichnet,**
**dass** für die Markierung (3) Markierungsmittel eingesetzt werden, die unter Normalbedingungen unsichtbar, jedoch mit einem für die Markierungsmittel spezifizierten Detektor (6) der Erfassungseinrichtung visualisierbar sind.

2. Informationssystem nach Anspruch 1, **dadurch gekennzeichnet, dass** die Markierung (3) ablösbar mit der Oberfläche verbunden ist.

3. Informationssystem nach Anspruch 1 oder 2, **dadurch gekennzeichnet, dass** als Markierungsmittel für die Markierung (3) eine im sichtbaren Spektralbereich im wesentlichen transmittierenden, in einem nicht-sichtbaren Spektralbereich jedoch reflektierenden oder absorbierenden Beschichtung vorgesehen ist.

4. Informationssystem nach einem der vorhergehenden Ansprüche, **dadurch gekennzeichnet, dass** als Markierungsmittel für die Markierung (3) ein luminiszierendes, insbesondere floureszierendes Medium vorgesehen ist, das bei Bestrahlung mit elektromagnetischer Strahlung einer bestimmten Wellenlänge in einem vorgegebenen Spektralbereich abstrahlt.

5. Informationssystem nach einem der vorhergehenden Ansprüche, **dadurch gekennzeichnet, dass** der Detektor eine elektronische Aufnahmevorrichtung, etwa eine elektronische Kamera (6), umfasst, mittels der ein frei wählbarer Bereich der Oberfläche des Gegenstandes (2) erfassbar ist.

6. Informationssystem nach Anspruch 5, **dadurch gekennzeichnet, dass** die Aufnahmevorrichtung (6) mit einer Auswerteeinheit (11) in Datenaustausch steht, mittels der die von der Aufnahmevorrichtung (6) übertragenen Bildinformationen in Daten über den Gegenstand umgewandelt und abrufbar abgespeichert werden können.

7. Informationssystem nach einem der vorhergehenden Ansprüche, dass der Aufnahmevorrichtung (6) und/oder die Auswerteeinheit (11) eine elektronische und/oder optische Filterung für den Spektralbereich, in dem das Markierungsmittel optisch erfassbar ist, zuschaltbar ist.

8. Informationssystem nach Anspruch 6 oder 7, **dadurch gekennzeichnet, dass** wenigstens eine Aufnahmevorrichtung (6) mit der Auswerteeinheit (11) über ein Datenfernübertragungsmedium in Datenaustausch steht.

9. Informationssystem nach Anspruch 8, **dadurch gekennzeichnet, dass** das Datenfernübertragungsmedium ein nichtlokales Datennetz, etwa das Internet (9), umfasst.

10. Informationssystem nach einem der Ansprüche 6 bis 9, **dadurch gekennzeichnet, dass** die Auswerteeinheit (11) zwecks Digitalisierung der von der Aufnahmeeinrichtung (6) übertragenen Bildinformation mit einer Software zur Mustererkennung versehen ist.

11. Informationssystem nach einem der vorhergehenden Ansprüche, **gekennzeichnet durch** den Einsatz zur Kennzeichnung von Wechselbehältern, insbesondere Gasbehältern (2).
